# EUROPEAN PATENT SPECIFICATION

(11) **EP 3 102 389 B1**
(45) Date of publication and mention of the grant of the patent: **28.08.2019**
(21) Application number: 15745849.8
(22) Date of filing: 05.02.2015
(51) Int. Cl.: B29C 64/153, B29C 64/20, B22F 3/105, B33Y 30/00, B23K 26/06, B23K 26/08, B23K 26/342, C21D 10/00, C22F 3/02

(54) **AN ADDITIVE MANUFACTURING SYSTEM WITH A MULTI-LASER BEAM GUN AND METHOD OF OPERATION**
SYSTEM ZUR ADDITIVEN FERTIGUNG MIT MEHRLASERSTRAHLPISTOLE UND VERFAHREN ZUM BETRIEB
SYSTÈME DE FABRICATION D'ADDITIF AVEC UN CANON À FAISCEAUX MULTI-LASER ET PROCÉDÉ DE FONCTIONNEMENT

(30) Priority: 06.02.2014 US 201461936652 P
(43) Date of publication of application: 14.12.2016
(73) Proprietor: United Technologies Corporation, Farmington, CT 06032 (US)
(72) Inventor: LONG, Yu, Ithaca New-York 14850 (US); ZHANG, Yan, Vernon, Connecticut 06510 (US); BEALS, James T., West Hartford, Connecticut 06107 (US)
(74) Representative: Dehns
(86) International application number: PCT/US2015/014649
(87) International publication number: WO 2015/120168

(56) References cited:
- WO-A2-2006/009818
- DE-A1- 19 953 000
- FR-A1- 2 980 380
- JP-A- 2009 220 576
- US-A- 5 393 482
- US-A- 5 508 489
- US-A- 5 640 667
- US-A- 5 640 667
- US-A- 5 866 058
- US-A1- 2006 249 496
- US-A1- 2011 305 590
- US-A1- 2013 136 868

## Description

### BACKGROUND

The present disclosure relates to an additive manufacturing system and, more particularly, to an additive manufacturing system with a multi-laser beam gun and a method of operation.

Traditional additive manufacturing systems include, for example, Additive Layer Manufacturing (ALM) Systems, such as Direct Metal Laser Sintering (DMLS), Selective Laser Melting (SLM), Laser Beam Melting (LBM) and Electron Beam Melting (EBM) that provide for the fabrication of complex metal, alloy, polymer, ceramic and composite structures by the freeform construction of the workpiece, layer-by-layer. The principle behind additive manufacturing processes involves the selective melting of atomized precursor powder beds by a single directed energy source, producing the lithographic build-up of the workpiece. The energy source is focused and targeted onto localized regions of the powder bed producing small melt pools, followed by rapid solidification. This melting and solidification process is repeated many times to form a single layer of the workpiece. Once a layer is completed, the powder bed is spread over the completed solidified layer and the process repeats as part of the layer-by-layer fabrication of the workpiece. These systems are typically directed by a three-dimensional model of the workpiece developed in a Computer Aided Design (CAD) software system.

The EBM System utilizes a single electron beam gun and the DMLS, SLM, and LBM Systems utilize a single laser as the energy source. Both system beam types are focused by a lens, then deflected by an electromagnetic scanner or rotating mirror so that the energy beam selectively impinges on the powder bed. The EBM System uses a beam of electrons accelerated by an electric potential difference and focused using electromagnetic lenses that selectively scan the powder bed.

Known ALM Systems have limited control over the heating and cooling cycles of the melt pools that can impact microstructure development of the workpiece and further lead to poor workpiece composition characteristics and properties.

Additive manufacturing techniques of the prior art are set out in WO 2006/009818 A2 and US 2006/249496 A1.

### SUMMARY

An additive manufacturing system for producing a workpiece from a substrate, according to one aspect of the present disclosure invention, is claimed in claim 1.

Various embodiments of the present invention are set out in the dependent claims.

A method of additively manufacturing a workpiece according to another aspect of the present invention, is claimed in claim 9.

In a further embodiment of the foregoing embodiment, the method includes the step of pre-heating a region of the substrate with the second energy beam before melting the region into the melt pool by the first energy beam.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic view of an additive manufacturing system according to an illustrative embodiment of the present disclosure;
FIG. 2 is a schematic view of an energy gun of the additive manufacturing system;
FIG. 3 is a schematic view of the energy gun having adjustably moveable energy source devices;
FIG. 4 is a schematic view of a second illustrative embodiment of an energy gun;
FIG. 5 is a schematic view of an embodiment of an energy gun in accordance with the invention;
FIG. 6 is an enlarge schematic view of a beam combinator of the energy gun of FIG. 5; and
FIG 7 is a schematic view of a second embodiment of an energy gun in accordance with the invention.

### DETAILED DESCRIPTION

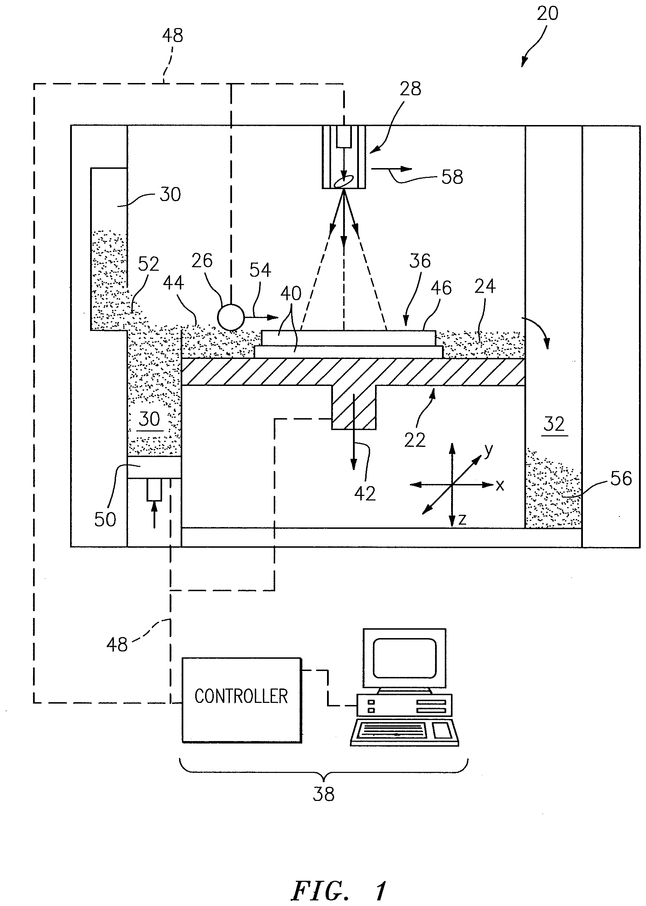

FIG. 1 schematically illustrates an additive manufacturing system 20 according to one illustrative example of the present disclosure that may have a build table 22 for holding a powder bed 24, a particle spreader or wiper 26 for spreading the powder bed 24 over the build table, an energy gun 28 for selectively melting regions of a layer of the powder bed, a powder supply hopper 30 for supplying powder to the spreader 26, and a powder surplus hopper 32. The additive manufacturing system 20 may be constructed to build a workpiece 36 in a layer-by-layer fashion.

A controller 38 may have an integral CAD system for modeling the workpiece 36 into a plurality of slices 40 additively built atop one-another generally in a vertical or z-coordinate direction (see arrow 42). Once manufactured, each solidified slice 40 corresponds to a layer 44 of the powder bed 24 prior to solidification. The layer 44 is placed on top of a build surface 46 of the previously solidified slice 40. The controller 38 generally operates the entire system through a series of electrical and/or digital signals 48 sent to the system 20 components. For instance, the controller 38 may send a signal 48 to a mechanical piston 50 of the supply hopper 30 to sequentially push a supply powder 52 upward for receipt by the spreader 26, or alternatively or in addition thereto, the supply hopper 30 may feed powder downward via gravity. The spreader 26 may be a wiper, roller or other device that pushes (see arrow 54) or otherwise places the supply powder 52 over the build surface 46 of the workpiece 36 by a pre-determined thickness established through downward movement (see arrow 42) of the build table 22 controlled by the controller 38. Any excess powder 56 may be pushed into the surplus hopper 32 by the spreader 26. It is further contemplated and understood that the layer 44 may not be composed of a powder but may take the form of any substrate that may be layed or applied across the build surface 46 in preparation for melting.

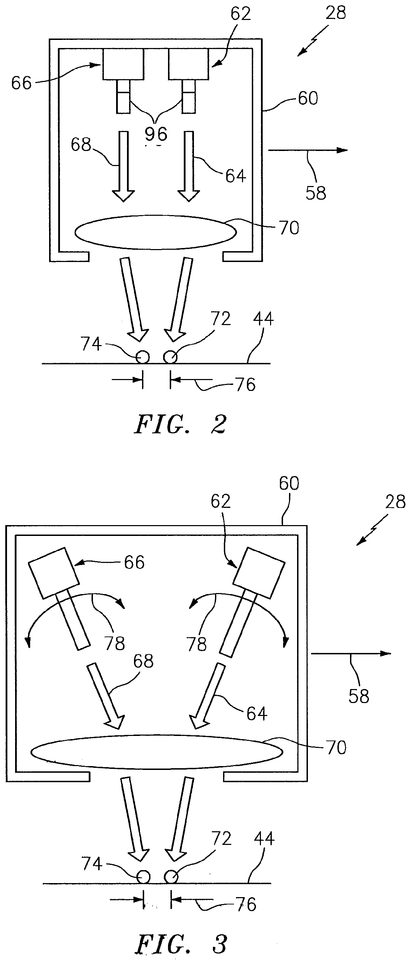

Once a substantially level powder layer 44 is established over the build surface 46, the controller 38 may send a signal 48 to the energy gun 28 to activate and generally move along the top layer 44 at a controlled velocity and direction (see arrow 58) and thereby selectively melt the top layer 44 on a region-by-region basis into melt pools. Referring to FIGS. 1 and 2, the energy gun 28 may have a housing 60, a primary energy source device 62 for emitting a primary energy beam 64, a secondary energy device 66 for emitting a secondary energy beam 68 for heat conditioning, and a lens 70 for focusing the energy beams 64, 68 upon the layer 44 and identified as respective hot spots 72, 74 on the layer. In FIG. 2, which is provided for illustrative purposes only the devices 62, 66 and lens 70 are supported by, and held stationary with respect to, the housing 60. Each energy source device 62 may further include fiber optic outputs 96 that emit and direct the energy beams 64, 68.

The energy beams 64, 68 may be substantially parallel to one-another prior to being refracted through the lens 70. Once refracted and focused, the beams are redirected to form the hot spots 72, 74 at a pre-determined distance 76 away from one-another. That is, the lens 70 is chosen to establish the desired distance 76 between the hot spots. As illustrated, the primary hot spot 72 is the location of the desired melt pool region of the powder layer 44, and the secondary hot spot 74 is the desired location for post heating, thereby controlling the cool down rate (or solidification rate) of the melt pool. Control of the solidification rate may be desired to reduce internal stresses of the workpiece and/or control microstructure development such as directional grain structure as, for example, that found in single crystal alloys. The pre-established distance 76 is dependent upon many factors that may include but is not limited to the powder composition, the power of the energy source devices 62, 66 the velocity of the energy gun 28, and other parameters.

In accordance with the invention the energy beams 64, 68 are laser beams capable of heating the powder to sufficient temperatures and at sufficient rates. Each beam may operate with different frequencies to meet manufacturing objectives. For instance, beams with shorter wavelengths may heat up the powder faster than beams with longer wavelengths. Different optical frequencies or wavelengths typically requires different types of lasers; for example, CO2 lasers, diode lasers, and fiber lasers. However, to pre-select the best wavelength (thus laser type) for heating and/or melting, the wavelength selected may be based on the composition of the metal powder (for example). That is, particles of a powder may have different heat absorption rates impacting melting rates and solidification rates. Moreover, and besides wavelength, other properties of the beam may be a factor. For instance, pulsed laser beams or continuous laser beams may be desired to melt the powder. It is also understood that by interchanging the two energy source devices 62, 66 the secondary energy source device 66 may be used to pre-heat the desired region to be melted as oppose to post heating. Yet further the heat gun 28 may have two secondary energy source devices that both follow the primary source device for pre-heating and post-heating, respectively.

Referring to FIG. 3, the energy gun 28 may be further capable of moving the energy source devices 62, 66 in a tilting movement with respect to the housing 60 (see arrows 78) and generally along the same imaginary plane that contains the respective hot spots 72, 74. Controlled tilting of the devices 62, 66 may then adjust the distance 76 between the hot spots 72, 74 for any given parameters. With devices 62, 66 have adjustable tilt capability, the distance 76 is not (or is less) dependent upon the choice of lenses 70. It is further contemplated and understood that with a three dimensional lens 70, the movement of the energy source devices 62, 66 may also be three dimensional, thus enabling move complex operations of the system 20. Yet further, it is contemplated that movement of the energy source devices 62, 66 may be limited to the fiber optic outputs 96 thereby relying on the routing capability and flexibility of the fiber optic technology.

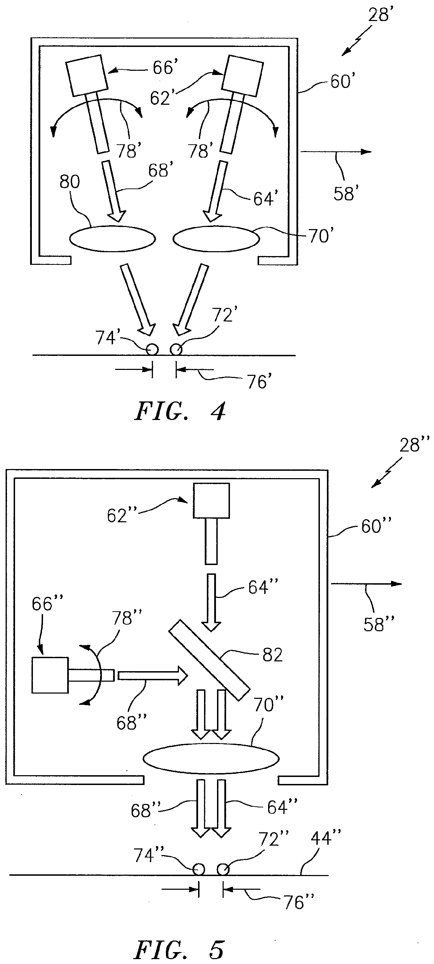

Referring to FIG. 4, a second illustrative embodiment of the energy gun is illustrated wherein like components to the first embodiment have like identifying numerals except with the addition of a prime symbol. The energy gun 28' of the second embodiment has a first lens 70' for focusing a primary energy beam 64' of a primary energy source device 62'. A second lens 80 focuses an energy beam 68' of a secondary energy source device 66'. Both lenses 70', 80 are supported by, and may be stationary with respect to, a housing 60' and the devices 62', 66' are constructed and arranged to move or pivot to adjust a distance 76' between hot spots 72', 74'.

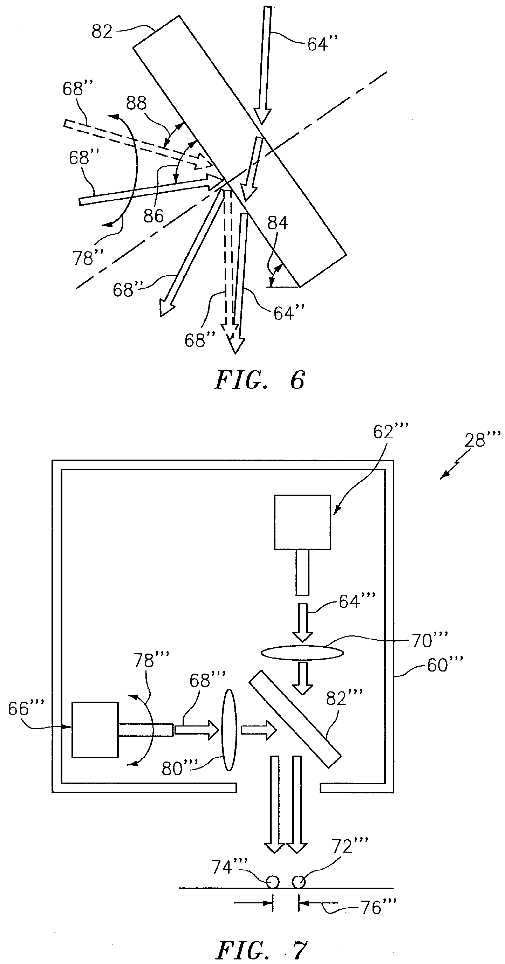

Referring to FIGS. 5 and 6, an embodiment of the energy gun in accordance with the invention is illustrated wherein like components to the first embodiment have like identifying numerals except with the addition of a double prime symbol. The energy gun 28" of this first embodiment of the present invention has a beam combinator 82 positioned between a lens 70" and primary and secondary lasers 62", 66". The combinator 82 is supported by a housing 60" and is positioned at a prescribed angle 84 with respect to the lens 70" and/or a powder layer 44". The angle 84 may be about forty-five degrees with the primary energy source 62" located above the combinator 82 such that an energy beam 64" emitted from the device 62" is directed downward and refracted, first through the combinator 82 and then through the lens 70". The energy beam 68" is configured to reflect upon the beam combinator 82, while the energy beam 64" is configured to refract upon the beam combinator 82. The device 62", the combinator 82 and the lens 70" are supported by and stationary with respect to the housing 60". The plurality of lasers 62", 66" are constructed and arranged to move with respect to the housing 60" to control the distance between the hot spots 72", 74". The housing 60" is configured to move at the controlled velocity, such that each one of the plurality of laser beams 64", 68" is configured to impart a hot spot 72", 74" upon the substrate at pre-arranged distances from one-another and the plurality of lasers 62", 66" are configured to move the hot spots 72", 74" in union across the substrate at controlled velocity. The secondary energy source device 66" may be positioned such that a secondary energy beam 68" is adjustably directed horizontally to reflect off of the combinator 82 and then refracted through the lens 70". Yet further, it is contemplated that movement of the lasers 62", 66" is limited to the fiber optic outputs 96, the fiber optic outputs of each one of the plurality of lasers 62", 66" being pivoted to produce movement of the plurality of lasers 62", 66", thereby relying on the routing capability and flexibility of the fiber optic technology.

Device 66" is supported by the housing 60" and is also constructed and arranged to pivot, tilt, or move with respect to the housing such that the beam 68" is adjustably reflected off of the beam combinator 82. As best shown in FIG. 6, a distance 76" between hot spots 72", 74" may be adjusted by changing the incident reflection angle upon the combinator 82. More specifically, the beam 68" may have a large reflection angle 86 producing a large distance between hot spots 72", 74". Moving or pivoting the energy source device 66" to produce a smaller reflection angle 88 will reduce the distance 76" between hot spots 72", 74". It is further contemplated and understood that the reflected beam 68" may be held stationary and the energy source device 62" emitting the energy beam 64" may be adjustably pivoted or moved to adjust the refraction angle thereby adjusting the distance 76".

Referring to FIG 7, an embodiment of an energy gun in accordance with the invention is illustrated wherein like elements to the second and third embodiments have like identifying numerals except with the addition of a triple prime symbol. In this second embodiment according to the invention, an energy gun 28'" has a primary energy beam 64"' that is first focused through a lens 70'" and then refracted through a beam combinator 82"'. A secondary energy beam 68'" is first focused through a second lens 80'" and then reflected off of the combinator 82"'. A secondary energy source device 66"', emitting the secondary energy beam 68'", is constructed and arranged to pivot or move with respect to a housing 60'" to adjust a distance 76'" between respective hot spots 72"', 74"'.

Referring to FIG 6 and in operation as step 100, a CAD system as part of the controller 38 models the workpiece 36 in a slice-by-slice, stacked orientation. As step 102, a powder bed layer 44 is spread directly over the build table 22 per signals 48 sent from the controller 38. As step 104, the energy gun 28 then melts on a melt pool by melt pool basis a pattern upon the layer 44 mimicking the contour of a bottom slice 46 of the plurality of slices 40 as dictated by the controller 38. As step 106, the melted portion of the powder layer solidifies over a predesignated time interval thereby completing the formation of a bottom slice 46.

As step 112, a powder bed layer 44 is spread over the defect-free bottom slice 46. As step 114, at least a portion of the layer is melted by the energy gun 28 along with a meltback region of the solidified bottom layer 46 in accordance with a CAD pattern of a top slice dictated by the controller 38. As step 116 the melted layer solidifies forming a top slice.

## Claims

1. An additive manufacturing system for producing a workpiece from a substrate, the system comprising:
a plurality of lasers (62", 66"; 62"', 66"') wherein each one of the plurality of lasers is configured to emit a respective one of a plurality of energy beams (64", 68"; 64"', 68"');
a lens (70"; 70"', 80"') configured to focus at least one of the plurality of energy beams (64", 68"; 64"', 68"');
a beam combinator (82); and
a housing (60"; 60"') wherein each one of the plurality of energy beams (64", 68"; 64"'. 68"') is configured to impart a hot spot (72", 74"; 72'", 74'") upon the substrate at pre-arranged distances (76", 76"') from one-another and the plurality of lasers (62", 66"; 62"', 66"') are configured to move the hot spots (72", 74"; 72'", 74'") in unison across the substrate at a controlled velocity;
wherein at least one of the plurality of energy beams (64", 68"; 64"', 68"') is configured to reflect upon the beam combinator (82) and at least one of the plurality of energy beams (64", 68"; 64"', 68"') is configured to refract upon the beam combinator (82);
wherein the housing (60"; 60"') is configured to move at the controlled velocity;
wherein the lens (70"; 70"', 80"') and beam combinator (82) are supported by and stationary with respect to the housing (60"; 60"') and the plurality of lasers (62", 66"; 62"', 66"') are constructed and arranged to move with respect to the housing (60"; 60"') to control the distance (76", 76"') between the hot spots (72", 74"; 72"', 74"'),
**characterised in that** the plurality of lasers (62", 66"; 62"', 66"') have fiber optic outputs (96) and the fiber optic outputs (96) of each one of the plurality of lasers (62", 66"; 62"', 66"') are pivoted to produce a movement of the plurality of lasers (62", 66"; 62"', 66'").

2. The additive manufacturing system set forth in claim 1, wherein the plurality of energy beams (64", 68"; 64'", 68'") includes a first energy beam configured to produce a melt pool from the substrate and a second energy beam, wherein the secondary energy beam is configured to post-heat the substrate to control a solidification rate of the melt pool or to pre-heat the substrate associated with the melt pool based on the distance (76", 76"') between the hot spots (72", 74", 72"', 74"').

3. The additive manufacturing system set forth in claim 1 or 2 wherein the plurality of energy beams (64", 68"; 64'", 68'") have different frequencies.

4. The additive manufacturing system set forth in any preceding claim, wherein the lens (70", 70'", 80'") is configured to focus the plurality of energy beams (64", 68"; 64'", 68'") and dictate the distance (76", 76"') between the hot spots (72", 74"; 72"', 74"').

5. The additive manufacturing system set forth in any preceding claim, further comprising:
a plurality of lenses (70"', 80"') wherein the lens is one of the plurality of lenses (70"', 80"'); and
wherein each one of the plurality of lenses (70"', 80"') are supported by and stationary with respect to the housing (60", 60"') and are configured to focus a respective one of the plurality of energy beams (64", 68"; 64"', 68"'), and wherein the plurality of lasers (62", 66"; 62"', 66"') are configured to move with respect to the housing (60"; 60"') to control the distance (76", 76'") between the hot spots (72", 74"; 72"', 74"').

6. The additive manufacturing system set forth in claim 5, wherein each one of the plurality of lenses (70"', 80"') are located between the beam combinator (82) and the respective lasers (62"', 66"').

7. The additive manufacturing system set forth in any preceding claim, wherein the beam combinator (82) is orientated between the plurality of lasers (62", 66"; 62'", 66'") and the lens (70"; 70"'; 80"').

8. The additive manufacturing system set forth in any preceding claim, further comprising:
a build table (22) configured to support a powder bed (24); and
a controller (38) configured to model the workpiece (36) as a plurality of slices (40) additively built a top one another, each slice (40) corresponding to a layer (44") of the powder bed (24) prior to a solidification of the slice (40).

9. A method of additively manufacturing a workpiece comprising the steps of:
melting a substrate into a melt pool with a first hot spot (72"; 72"') imparted upon a substrate by a first energy beam (64"; 64"') emitted by a first laser (62"; 62"');
heat conditioning the substrate with a second hot spot (74"; 74"') imparted upon a substrate by a second energy beam (68"; 68"') emitted by a second laser (66"; 66"');
focusing, with a lens (70"; 70"', 80"'), at least one of the first energy beam (64"; 64"') or the second energy beam (68"; 68"');
reflecting one of the first energy beam (64"; 64"') or the second energy beam (68"; 68"') upon a beam combinator (82) and refracting the other of the first energy beam (64"; 64"') or the second energy beam (68"; 68"') upon the beam combinator (82);
moving a housing (60"; 60"') at a controlled velocity;
moving at least one of the lasers (62", 66"; 62"', 66"') with respect to the housing (60"; 60"') to control a distance (76", 76"') between the first and second hot spots (72", 74"; 72"', 74"');
moving the hot spots (72", 74"; 72"', 74"') in unison across the substrate at the controlled velocity; and
supporting the lens (70"; 70"', 80"') and beam combinator (82) with the housing (60"; 60"');
wherein the lens (70"; 70"', 80"') and beam combinator (82) are stationary with respect to the housing (60"; 60"'),
**characterised in that** the first laser (62"; 62"') and the second laser (66"; 66"') each have fiber optic outputs (96) that are pivoted to produce a movement of the first laser (62"; 62"') and the second laser (66"; 66"').

10. The method as set forth in claim 9 further comprising:
pre-heating a region of the substrate with the second energy beam (68"; 68"') before melting the region into the melt pool by the first energy beam (64"; 64"').

## Patentansprüche

1. System zur additiven Herstellung zur Produktion eines Werkstücks aus einem Substrat, wobei das System Folgendes umfasst:
eine Vielzahl von Lasern (62", 66"; 62"', 66"'), wobei jeder der Vielzahl von Lasern dazu konfiguriert ist, einen jeweiligen von einer Vielzahl von Energiestrahlen (64", 68"; 64"', 68"') zu emittieren;
eine Linse (70"; 70"', 80"'), die dazu konfiguriert ist mindestens einen der Vielzahl von Energiestrahlen (64", 68"; 64"', 68"') zu bündeln;
eine Strahlenkombiniervorrichtung (82); und
ein Gehäuse (60"; 60"'), wobei jeder der Vielzahl von Energiestrahlen (64", 68"; 64"', 68"') dazu konfiguriert ist, dem Substrat einen Hotspot (72", 74"; 72"', 74"') bei vorangeordneten Distanzen (76", 76"') voneinander zu verleihen und die Vielzahl von Lasern (62", 66"; 62"', 66"') dazu konfiguriert ist, die Hotspots (72", 74"; 72"', 74"') im Einklang mit einer gesteuerten Geschwindigkeit über das Substrat zu bewegen;
wobei mindestens einer der Vielzahl von Energiestrahlen (64", 68"; 64"', 68"') dazu konfiguriert ist, bei der Strahlenkombiniervorrichtung (82) reflektiert zu werden und mindestens einer der Vielzahl von Energiestrahlen (64", 68"; 64"', 68"') dazu konfiguriert ist, bei der Strahlenkombiniervorrichtung (82) gebrochen zu werden;
wobei das Gehäuse (60"; 60"') dazu konfiguriert ist, sich mit einer gesteuerten Geschwindigkeit zu bewegen;
wobei die Linse (70"; 70"', 80"') und die Strahlenkombiniervorrichtung (82) von dem Gehäuse (60"; 60"') gestützt werden und in Bezug auf dieses stationär sind und die Vielzahl von Lasern (62", 66"; 62"', 66"') dazu konstruiert und angeordnet sind, sich in Bezug auf das Gehäuse (60"; 60"') zu bewegen, um die Distanz (76", 76"') zwischen den Hotspots (72", 74"; 72"', 74"') zu steuern,
**dadurch gekennzeichnet, dass** die Vielzahl von Lasern (62", 66"; 62"', 66"') faseroptische Ausgänge aufweisen (96) und die faseroptischen Ausgänge (96) von jedem der Vielzahl von Lasern (62", 66"; 62"', 66"') geschwenkt werden, um eine Bewegung der Vielzahl von Lasern (62", 66"; 62"', 66"') zu produzieren.

2. System zur additiven Herstellung nach Anspruch 1, wobei die Vielzahl von Energiestrahlen (64", 68"; 64"', 68"') einen ersten Energiestrahl, der dazu konfiguriert ist, ein Schmelzbad aus dem Substrat zu produzieren, und einen zweiten Energiestrahl einschließt, wobei der sekundäre Energiestrahl dazu konfiguriert ist, das Substrat wärmenachzubehandeln, um eine Verfestigungsrate des Schmelzbads zu steuern oder das Substrat, das mit dem Schmelzbad assoziiert ist, auf der Basis der Distanz (76", 76"') zwischen den Hotspots (72", 74"; 72"', 74"') wärmevorzubehandeln.

3. System zur additiven Herstellung nach Anspruch 1 oder 2, wobei die Vielzahl von Energiestrahlen (64", 68"; 64"', 68"') verschiedene Frequenzen aufweisen.

4. System zur additiven Herstellung nach einem der vorhergehenden Ansprüche, wobei die Linse (70", 70"', 80"') dazu konfiguriert ist, die Vielzahl von Energiestrahlen (64", 68"; 64"', 68"') zu bündeln und die Distanz (76", 76"') zwischen den Hotspots (72", 74"; 72"', 74"') vorzuschreiben.

5. System zur additiven Herstellung nach einem der vorhergehenden Ansprüche, ferner umfassend:
eine Vielzahl von Linsen (70"', 80"'), wobei die Linse eine der Vielzahl von Linsen (70"', 80"') ist; und
wobei jede der Vielzahl von Linsen (70"', 80"') durch das Gehäuse (60", 60"') gestützt wird und stationär zu diesem und dazu konfiguriert ist, einen entsprechenden der Vielzahl von Energiestrahlen (64", 68"; 64"', 68"') zu bündeln, und wobei die Vielzahl von Lasern (62", 66"; 62"', 66"') dazu konfiguriert ist, sich in Bezug auf das Gehäuse (60"; 60"') zu bewegen, um die Distanz (76", 76"') zwischen den Hotspots (72", 74"; 72"', 74"') zu steuern.

6. System zur additiven Herstellung nach Anspruch 5, wobei jede der Vielzahl von Linsen (70"', 80"') sich zwischen der Strahlenkombiniervorrichtung (82) und den jeweiligen Lasern (62"', 66"') befindet.

7. System zur additiven Herstellung nach einem der vorhergehenden Ansprüche, wobei die Strahlenkombiniervorrichtung (82) zwischen der Vielzahl von Lasern (62", 66"; 62"', 66"') und der Linse (70"; 70"'; 80"') ausgerichtet ist.

8. System zur additiven Herstellung nach einem der vorhergehenden Ansprüche, ferner umfassend:
einen Aufbautisch (22), der dazu konfiguriert ist, ein Pulverbett (24) zu stützen; und
eine Steuerung (38), die dazu konfiguriert ist, das Werkstück (36) als eine Vielzahl von Scheiben (40) zu modellieren, die additiv übereinander aufgebaut werden, wobei jede Scheibe (40) einer Schicht (44") des Pulverbetts (24) vor einer Verfestigung der Scheibe (40) entspricht.

9. Verfahren zur additiven Herstellung eines Werkstücks, das die folgenden Schritte umfasst:
Schmelzen eines Substrats in ein Schmelzbad mit einem ersten Hotspot (72"; 72"') der einem Substrat durch einen ersten Energiestrahl (64"; 64"') verliehen wird, der von einem ersten Laser (62"; 62"') emittiert wird;
Wärmekonditionieren des Substrats mit einem zweiten Hotspot (74"; 74"'), der einem Substrat von einem zweiten Energiestrahl (68"; 68"') verliehen wird, der von einem zweiten Laser (66"; 66"') emittiert wird;
Bündeln mit einer Linse (70"; 70"', 80"') von mindestens einem von dem ersten Energiestrahl (64"; 64"') und dem zweiten Energiestrahl (68"; 68"');
Reflektieren von einem von dem ersten Energiestrahl (64"; 64"') und dem zweiten Energiestrahl (68"; 68"') bei der Strahlenkombiniervorrichtung (82) und Brechen des anderen von dem ersten Energiestrahl (64"; 64"') und dem zweiten Energiestrahl (68"; 68"') bei der Strahlenkombiniervorrichtung (82);
Bewegen eines Gehäuses (60"; 60"') mit einer gesteuerten Geschwindigkeit;
Bewegen von mindestens einem der Laser (62", 66"; 62"', 66"') in Bezug auf das Gehäuse (60", 60"'), um eine Distanz (76", 76"') zwischen dem ersten und dem zweiten Hotspot (72", 74"; 72"', 74"') zu steuern;
Bewegen der Hotspots (72", 74"; 72"', 74"') im Einklang über das Substrat mit einer gesteuerten Geschwindigkeit; und Stützen der Linse (70"; 70"', 80"') und der Strahlenkombiniervorrichtung (82) mit dem Gehäuse (60"; 60"'); wobei die Linse (70"; 70"', 80"') und die Strahlenkombiniervorrichtung (82) in Bezug auf das Gehäuse (60"; 60"') stationär sind,
**dadurch gekennzeichnet, dass** der erste Laser (62"; 62"') und der zweite Laser (66"; 66"') jeweils einen faseroptischen Ausgang (96) aufweisen, die geschwenkt werden, um eine Bewegung des ersten Lasers (62"; 62"') und des zweiten Lasers (66"; 66"') zu produzieren.

10. Verfahren nach Anspruch 9, ferner umfassend:
Vorwärmen einer Region des Substrats mit dem zweiten Energiestrahl (68"; 68"') vor dem Schmelzen der Region in das Schmelzbad durch den ersten Energiestrahl (64"; 64"').

## Revendications

1. Système de fabrication additive pour produire une pièce à partir d'un substrat, le système comprenant :
une pluralité de lasers (62", 66" ; 62"', 66"') dans lequel chacun de la pluralité de lasers est configuré pour émettre un d'une pluralité de faisceaux d'énergie (64", 68" ; 64"', 68"') respectif ;
une lentille (70" ; 70"', 80"') configurée pour concentrer au moins un de la pluralité de faisceaux d'énergie (64", 68" ; 64'", 68'") ;
un combinateur de faisceaux (82) ; et
un boîtier (60" ; 60"') dans lequel chacun de la pluralité de faisceaux d'énergie (64", 68" ; 64'", 68"') est configuré pour transmettre un point chaud (72", 74" ; 72"', 74"') sur le substrat à des distances pré-agencées (76", 76""") les unes des autres et la pluralité de lasers (62", 66" ; 62'", 66'") sont configurés pour déplacer les points chauds (72", 74" ; 72"', 74"') à l'unisson à travers le substrat à une vitesse commandée ;
dans lequel au moins un de la pluralité de faisceaux d'énergie (64", 68" ; 64'", 68'") est configuré pour réfléchir sur le combinateur de faisceaux (82) et au moins un de la pluralité de faisceaux d'énergie (64", 68" ; 64"', 68'") est configuré pour se réfracter sur le combinateur de faisceaux (82) ;
dans lequel le boîtier (60" ; 60"') est configuré pour se déplacer à la vitesse commandée ;
dans lequel la lentille (70" ; 70"', 80"') et le combinateur de faisceaux (82) sont supportés par le boîtier (60" ; 60"') et stationnaires par rapport à ces derniers et la pluralité de lasers (62", 66" ; 62'", 66'") sont construits et agencés pour se déplacer par rapport au boîtier (60" ; 60"') pour commander la distance (76", 76"') entre les points chauds (72", 74" ; 72"', 74"'), **caractérisé en ce que** la pluralité de lasers (62", 66" ; 62"', 66"') ont des sorties de fibres optiques (96) et les sorties de fibres optiques (96) de chacun de la pluralité de lasers (62", 66" ; 62"', 66"') sont pivotées pour produire un déplacement de la pluralité de lasers (62", 66" ; 62"', 66"').

2. Système de fabrication additive selon la revendication 1, dans lequel la pluralité de faisceaux d'énergie (64", 68" ; 64"', 68"') incluent un premier faisceau d'énergie configuré pour produire une masse fondue à partir du substrat et un deuxième faisceau d'énergie, dans lequel le faisceau d'énergie secondaire est configuré pour post-chauffer le substrat afin de commander une vitesse de solidification de la masse fondue ou pour préchauffer le substrat associé à la masse fondue sur la base de la distance (76", 76"') entre les points chauds (72", 74" ; 72'", 74'").

3. Système de fabrication additive selon la revendication 1 ou 2 dans lequel la pluralité de faisceaux d'énergie (64", 68" ; 64"', 68'") ont des fréquences différentes.

4. Système de fabrication additive selon une quelconque revendication précédente, dans lequel la lentille (70", 70"', 80"') est configurée pour concentrer la pluralité de faisceaux d'énergie (64", 68" ; 64"', 68"') et imposer la distance (76", 76'") entre les points chauds (72", 74" ; 72"', 74"').

5. Système de fabrication additive selon une quelconque revendication précédente, comprenant en outre :
une pluralité de lentilles (70"', 80"') dans lequel la lentille est une de la pluralité de lentilles (70"', 80"') ; et
dans lequel chacune de la pluralité de lentilles (70"', 80"') est supportée par le boîtier (60", 60"') et stationnaire par rapport à ce dernier et est configurée pour concentrer un de la pluralité de faisceaux d'énergie (64", 68" ; 64"', 68"') respectif, et dans lequel la pluralité de lasers (62", 66" ; 62"', 66"') sont configurés pour se déplacer par rapport au boîtier (60" ; 60"') pour commander la distance (76", 76"') entre les points chauds (72", 74" ; 72"', 74"').

6. Système de fabrication additive selon la revendication 5, dans lequel chacune de la pluralité de lentilles (70"', 80"') est située entre le combinateur de faisceaux (82) et les lasers respectifs (62"', 66"').

7. Système de fabrication additive selon une quelconque revendication précédente, dans lequel le combinateur de faisceaux (82) est orienté entre la pluralité de lasers (62", 66" ; 62"', 66"') et la lentille (70" ; 70'" ; 80'").

8. Système de fabrication additive selon une quelconque revendication précédente, comprenant en outre :
une table de construction (22) configurée pour supporter un lit de poudre (24) ; et
un dispositif de commande (38) configuré pour modeler la pièce (36) en tant qu'une pluralité de tranches (40) accumulées de manière additive les unes sur les autres, chaque tranche (40) correspondant à une couche (44") du lit de poudre (24) avant une solidification de la tranche (40).

9. Procédé de fabrication additive d'une pièce comprenant les étapes de :
fusion d'un substrat en une masse fondue avec un premier point chaud (72" ; 72"') transmis sur un substrat par un premier faisceau d'énergie (64" ; 64"') émis par un premier laser (62" ; 62'") ;
conditionnement thermique du substrat avec un deuxième point chaud (74" ; 74'") transmis sur un substrat par un deuxième faisceau d'énergie (68" ; 68"') émis par un deuxième laser (66" ; 66'") ;
concentration, avec une lentille (70" ; 70"', 80'"), d'au moins un parmi le premier faisceau d'énergie (64" ; 64"') ou le deuxième faisceau d'énergie (68" ; 68"') ;
réflexion d'un parmi le premier faisceau d'énergie (64" ; 64'") ou le deuxième faisceau d'énergie (68" ; 68'") sur un combinateur de faisceaux (82) et réfraction de l'autre parmi le premier faisceau d'énergie (64" ; 64"') ou le deuxième faisceau d'énergie (68" ; 68'") sur le combinateur de faisceaux (82) ;
déplacement d'un boîtier (60" ; 60"') à une vitesse commandée ;
déplacement d'au moins un des lasers (62", 66" ; 62"', 66"') par rapport au boîtier (60" ; 60"') pour commander une distance (76", 76"') entre les premier et deuxième points chauds (72", 74" ; 72"' , 74"') ;
déplacement des points chauds (72", 74" ; 72"', 74'") à l'unisson à travers le substrat à la vitesse commandée ; et support de la lentille (70" ; 70"', 80'") et du combinateur de faisceaux (82) avec le boîtier (60" ; 60'") ;
dans lequel la lentille (70" ; 70"', 80"') et le combinateur de faisceaux (82) sont stationnaires par rapport au boîtier (60" ; 60'"),
**caractérisé en ce que** le premier laser (62" ; 62"') et le deuxième laser (66" ; 66"') ont chacun des sorties de fibres optiques (96) qui sont pivotées pour produire un déplacement du premier laser (62" ; 62"') et du deuxième laser (66" ; 66'").

10. Procédé selon la revendication 9 comprenant en outre : le préchauffage d'une région du substrat avec le deuxième faisceau d'énergie (68" ; 68"') avant la fusion de la région dans la masse fondue par le premier faisceau d'énergie (64" ; 64"').
